# EUROPEAN PATENT APPLICATION

(11) **EP 2 272 741 A2**
(43) Date of publication of application: **12.01.2011**
(21) Application number: 10006783.4
(22) Date of filing: 30.06.2010
(51) Int. Cl.: B62J 6/02

(54) **Control circuit for regulating brightness of lighting device responsive to moving speed of bike**

(30) Priority: 07.07.2009 TW 98212278
(71) Applicant: Bion Inc., Taipei City 110 (TW)
(72) Inventor: Chen, Yi-Lun, Taipei City 110 (TW)
(74) Representative: Meyer, Thorsten

(57) **Abstract**

A control circuit for regulating brightness of a lighting device (1, 1a, 1b) responsive to moving speed of a bike includes a speed detection unit (2), a speed-to-brightness conversion circuit (3), a brightness regulation circuit (4) and a driving circuit (5). The speed detection unit (2) is configured for detecting moving speed of the bike and generating a speed signal. The speed-to-brightness conversion circuit (3) is coupled to the speed detection unit (2) for generating a conversion signal according to the speed signal. The brightness regulation circuit (4) is coupled to the speed-to-brightness conversion circuit (3) for generating a brightness regulation signal according to the conversion signal. The driving circuit (5) is coupled to the brightness regulation circuit (4) for regulating brightness of the lighting device (1, 1a, 1b) according to the brightness regulation signal.

## Description

### BACKGROUND OF THE INVENTION

The invention relates to a control circuit, and in particular, to a control circuit for regulating brightness of lighting device responsive to moving speed of a bike.

### FIELD OF THE INVENTION

As petroleum price rises, most people have gradually reduced the number of driving out. Besides, people also attach great importance to the issues about power saving and carbon reducing, and hence the bikes and electric motorcycles gradually become a tool for commuting or traveling. In particular to bicycles, they are not only as a tool for traveling in the weekdays, but also as a recreational sport in the weekends.

Not like the car, bicycles usually do not have lighting device in the front parts. When a user rides a bicycle at night, he may get hurts in an accident due to the lack of lighting. Therefore, lighting device may be implemented in the steering handle of bike for lighting and reducing the number of accidents.

However, a conventional bicycle lighting device can only be adjusted manually for obtaining different lighting status or lighting brightness. Users often can not immediately adjust brightness for the lighting device because they must pay attention to traffic conditions. Especially when riding at high speed, it is dangerous to manually adjust brightness of lighting device.

In light of the above, the invention provides a control circuit for regulating brightness of lighting device responsive to moving speed of a bike.

According to the invention, brightness of lighting device is regulated by detecting moving speed of the bike. When riding at high speed, the speed detection unit detects moving speed of the bike, and then a speed signal is transmitted to a lighting module. A brightness regulation circuit of the lighting module switches the lighting status to high beam or increases lighting brightness. When riding at low speed, the speed detection unit detects moving speed of the bike, and then the speed signal is transmitted to a lighting module. The brightness regulation circuit of the lighting module switches the lighting status to low beam or decreases lighting brightness. By detecting moving speed to regulate the lighting status of the bike, the problem of manually adjusting the lighting status can be solved. Accordingly, the traffic accidents resulted manually adjusting the lighting status can be prevented from happening.

### SUMMARY OF THE INVENTION

The invention provides a control circuit for regulating brightness of a lighting device responsive to moving speed of a bike, including a speed detection unit, a speed-to-brightness conversion circuit, a brightness regulation circuit and a driving circuit. The speed detection unit is configured for detecting moving speed of the bike and generating a speed signal. The speed-to-brightness conversion circuit is coupled to the speed detection unit for generating a conversion signal according to the speed signal. The brightness regulation circuit is coupled to the speed-to-brightness conversion circuit for generating a brightness regulation signal according to the conversion signal. The driving circuit is coupled to the brightness regulation circuit for regulating brightness of the lighting device according to the brightness regulation signal.

### BRIEF DESCRIPTION OF THE DRAWINGS

The invention can be more fully understood by reading the subsequent detailed description and examples with references made to the accompanying drawings, **characterized in that**:
FIG. 1 is a block diagram of a control circuit according to first embodiment of the invention;
FIG. 2 depicts a brightness LUT according to the invention;
FIG. 3 is a block diagram of a control circuit according to second embodiment of the invention;
FIG. 4 is a block diagram of a control circuit according to third embodiment of the invention;
FIG. 5 is a block diagram of a control circuit according to fourth embodiment of the invention;
FIG. 6 depicts a diagram illustrating the implementation of the control circuits and the bike according to the invention; and
FIG. 7 is a block diagram of a control circuit according to fifth embodiment of the invention.

### DETAILED DESCRIPTION OF THE PREFERRED EMBODIMENTS

The following description is of the best-contemplated mode of carrying out the invention. This description is made for the purpose of illustrating the general principles of the invention and should not be taken in a limiting sense. The scope of the invention is best determined by reference to the appended claims.

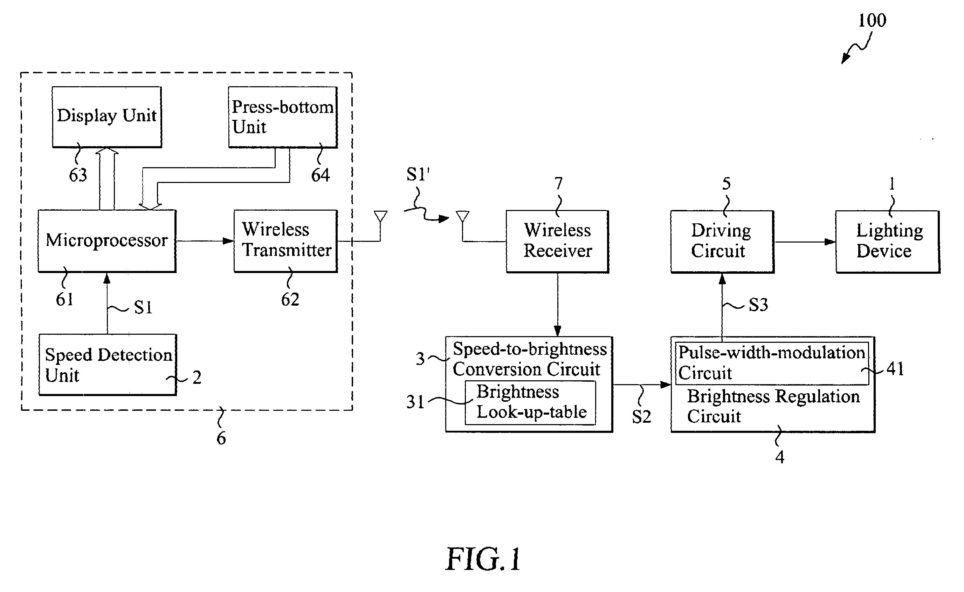

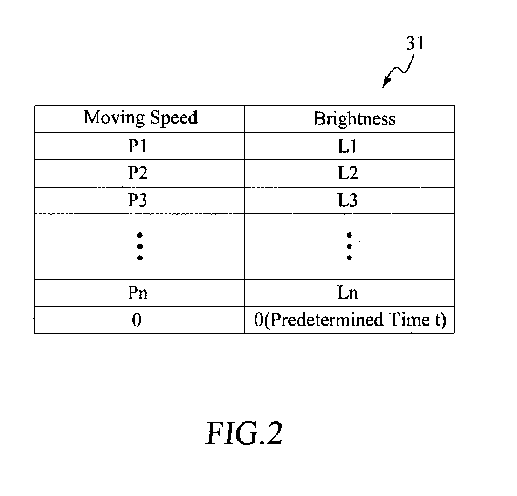

Referring to FIG. 1 and FIG. 2 (first embodiment), the invention discloses a control circuit 100, which regulates brightness of a lighting device 1 by detecting moving speed of a bike. The control circuit 100 includes a speed detection unit 2, a speed-to-brightness conversion circuit 3, a brightness regulation circuit 4 and a driving circuit 5. The speed detection unit 2 detects moving speed of the bike and generates a speed signal S1. The speed-to-brightness conversion circuit 3 is coupled to the speed detection unit 2 and generates a conversion signal S2 according to the speed signal S1 produced from the speed detection unit 2.

The brightness regulation circuit 4 is coupled to the speed-to-brightness conversion circuit 3 and generates a brightness regulation signal S3 according to the conversion signal S2 produced from the speed-to-brightness conversion circuit 3. The driving circuit 5 regulates brightness of the lighting device 1 according to the brightness regulation signal S3 produced from the brightness regulation circuit 4.

The speed detection unit 2 is implemented in a speed meter 6 and transmits the speed signal S1 to the speed-to-brightness conversion circuit 3 in a wireless manner. The speed meter 6 includes a microprocessor 61 and a wireless transmitter 62. When the speed detection unit 2 generates the speed signal S1, the microprocessor 61 controls the wireless transmitter 62 to transmit a speed signal S1' to a wireless receiver 7, and thereby the speed-to-brightness conversion circuit 3 receives the speed signal S1. In the first embodiment, the microprocessor 61 is also coupled to a display unit 63 and a press-bottom unit 64. The display unit 63 is configured to display moving speeds of the bike or other predetermined display data. The press-bottom unit 64 is configured to generate an input instruction to the microprocessor 61, and then the microprocessor 61 performs/executes at least one predetermined action/program according to the input instruction.

The speed-to-brightness conversion circuit 3 has a brightness look-up-table (LUT) 31 implemented therein (also referring to FIG. 2). The brightness LUT 31 stores moving speeds P1, P2, P3..., Pn and brightness L1, L2, L3..., Ln corresponding to the moving speeds P1, P2, P3..., Pn. It is notes that brightness L1 is essential. When the speed signal S1 from the speed detection unit 2 is transmitted to the speed-to-brightness conversion circuit 3, the speed-to-brightness conversion circuit 3 obtains the moving speed P1, P2, P3... , Pn and outputs a conversion signal S2 to the brightness regulation circuit 4 according to the brightness L1, L2, L3..., Ln. For example, the speed-to-brightness conversion circuit 3 obtains the moving speeds P2 correspond to the speed signal S1 to map the brightness L2 in LUT 31 and outputs a conversion signal S2 to the brightness regulation circuit 4 according to the corresponding brightness L2.

The brightness regulation circuit 4 includes a pulse-width-modulation (PWM) circuit 41 for controlling the driving circuit 5 to regulate brightness of the lighting device 1 in the manner of pulse-width-modulation. In other embodiments, the PWM circuit 41 is replaced by a voltage control circuit or a current control circuit for regulating brightness of the lighting device 1.

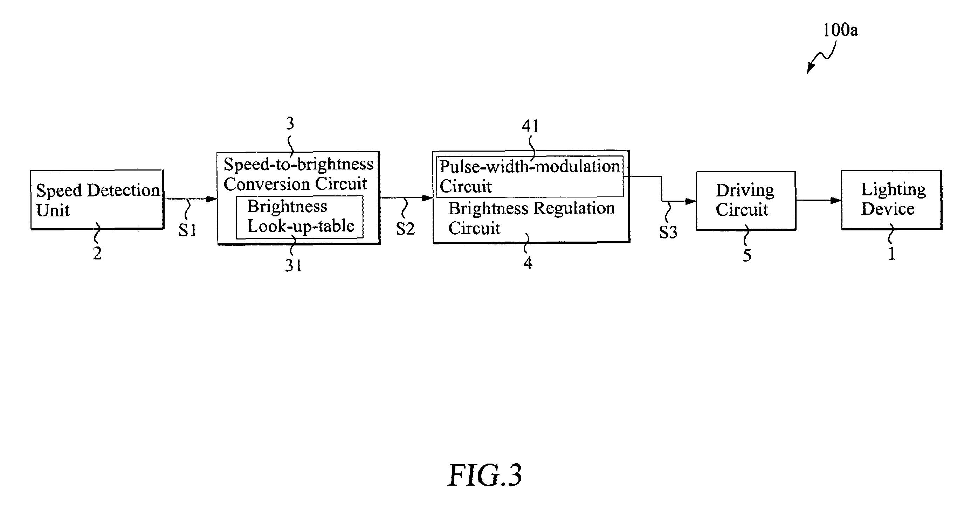

Referring to the control circuit 100a shown in FIG. 3 (second embodiment), the speed-to-brightness conversion circuit 3 and the brightness regulation circuit 41 are coupled with each other, which represents that the speed-to-brightness conversion circuit 3 is coupled to the brightness regulation circuit 41 in a wired manner. The difference between the first and second embodiments is that the speed detection unit 2 is not implemented in the speed meter 6.

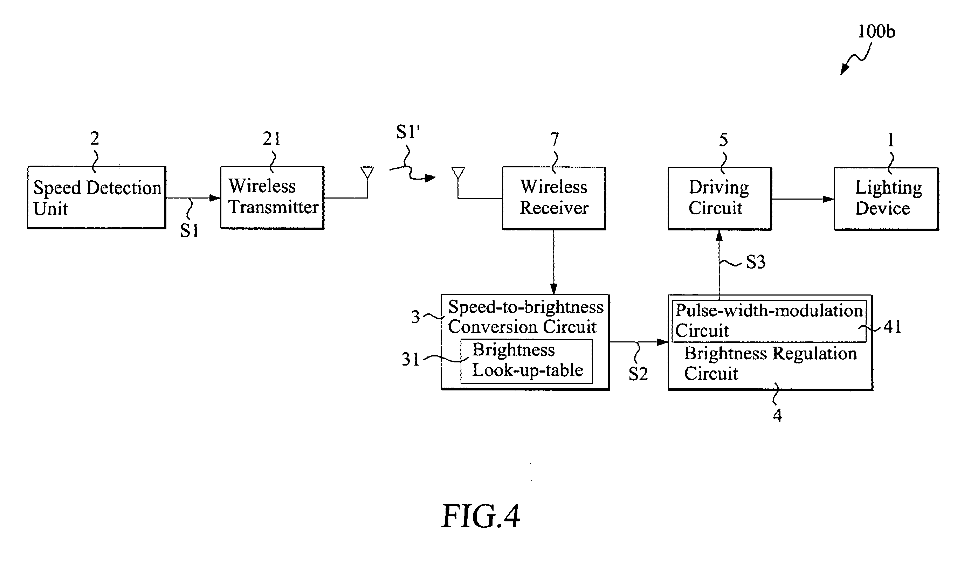

Referring to the control circuit 100b shown in FIG. 4 (third embodiment), the speed detection unit 2 is coupled to a wireless transmitter 21, in which the wireless transmitter 21 transmits a speed signal S1' to a wireless receiver 7, and thereby the speed-to-brightness conversion circuit 3 receives the speed signal S1. Note that in the third embodiment, the speed detection unit 2 is not implemented in the speed meter 6, and the control circuit 100b transmits/receives the speed signal S1 in a wireless manner.

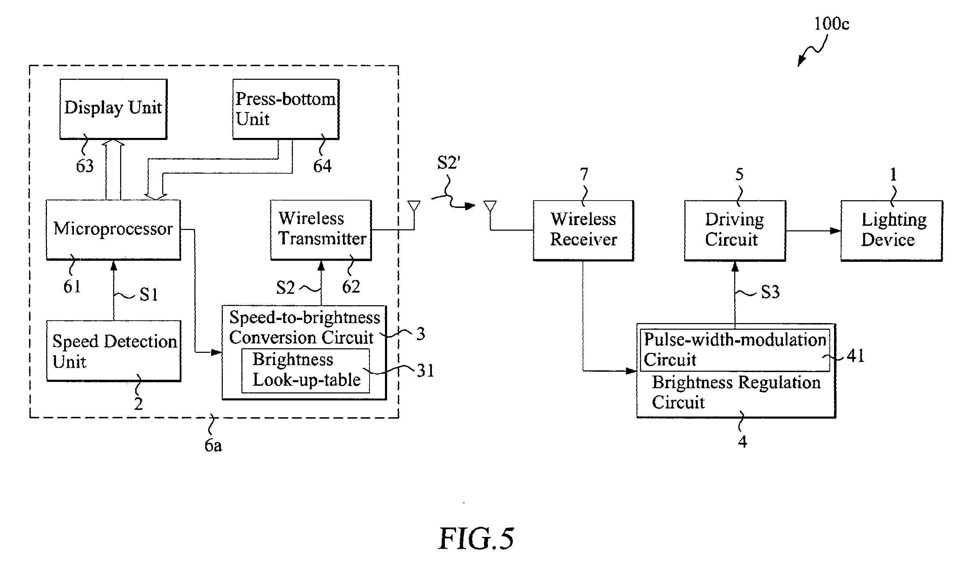

Referring to the control circuit 100c shown in FIG. 5 (fourth embodiment), the speed detection unit 2 and the speed-to-brightness conversion circuit 3 are implemented in a speed meter 6a. When the speed detection unit 2 transmits the speed signal S1 to the microprocessor 61, the microprocessor 61 controls the speed-to-brightness conversion circuit 3 to transmit a conversion signal S2 to a wireless receiver 62. The wireless transmitter 62 transmits a conversion signal S2' to the wireless receiver 7, and thereby the brightness regulation 4 receives the speed signal S1.

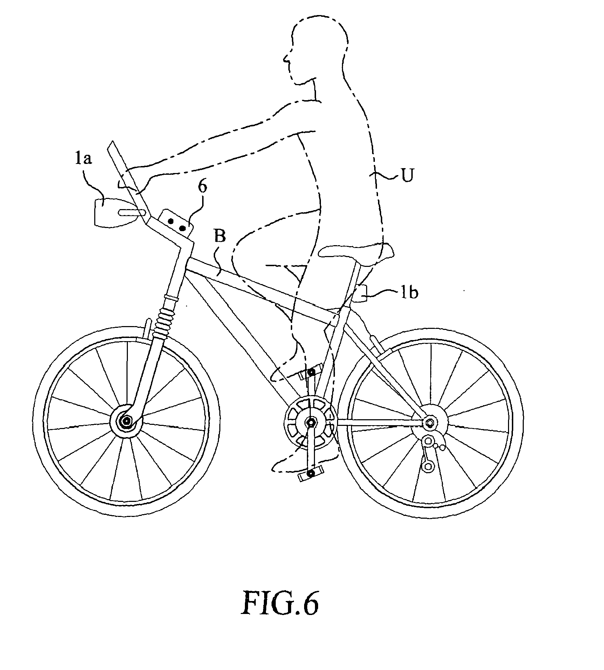

FIG. 6 depicts a diagram illustrating the implementation of the control circuits and the bike according to various embodiments described above. As shown in FIG. 6, an user U rides a bike B, the speed meter 6 described in first embodiment is implemented on a steering handle of the bike B, and the lighting device 1 is a headlight 1 a implemented in the front of the bike B or a taillight 1b implemented below the seat of the bike B.

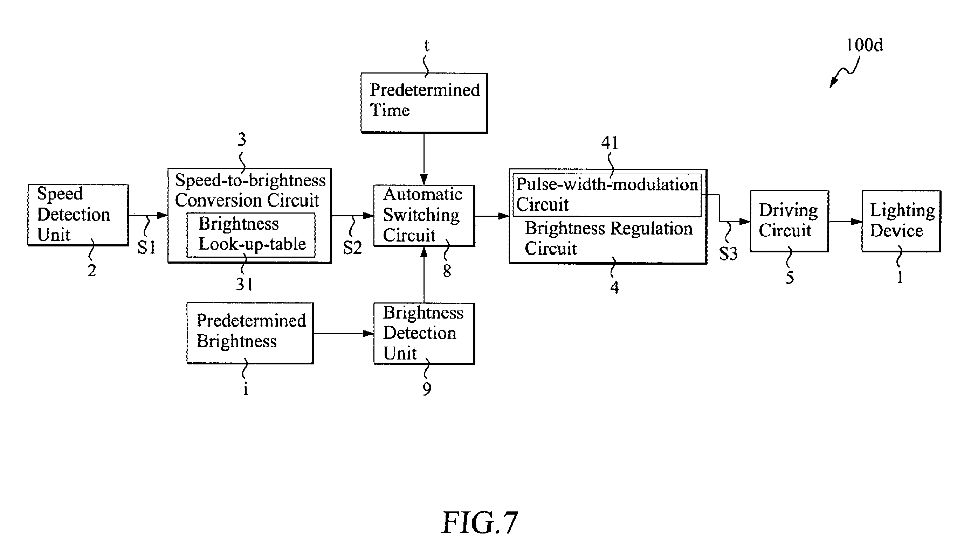

Referring to the control circuit 100d shown in FIG. 7 (fifth embodiment), the control circuit 100d further includes an automatic switching circuit 8. When the speed detection unit 2 detects moving speed of the bike maintained zero for a predetermined time t, the automatic switching circuit 8 turns off the lighting device 1; and when moving speed of the bike is not zero, the automatic switching circuit 8 turns on the lighting device 1 again for emitting light to a basic brightness L1 (also referring to FIG. 2). In fifth embodiment, the control circuit 100d further includes a brightness detection unit 9. The brightness detection unit 9 is coupled to the automatic switching circuit 8 for detecting brightness of surroundings and turning on the lighting device 1 when the brightness detection unit 9 detects brightness of surroundings was less than a predetermined brightness i.

The foregoing description of the exemplary embodiments of the invention has been presented only for the purposes of illustration and description and is not intended to be exhaustive or to limit the invention to the precise forms disclosed. Many modifications and variations are possible in light of the above teaching. The embodiments were chosen and described in order to explain the principles of the invention and their practical application so as to activate others skilled in the art to utilize the invention and various embodiments and with various modifications as are suited to the particular use contemplated. Alternative embodiments will become apparent to those skilled in the art to which the present invention pertains without departing from its spirit and scope. Accordingly, the scope of the present invention is defined by the appended claims rather than the foregoing description and the exemplary embodiments described therein.

## Claims

1. A control circuit (100, 100a, 100b, 100c, 100d) for regulating a brightness of a lighting device (1, 1a, 1b) responsive to moving speed of a bike, **characterized in that** the control circuit (100, 100a, 100b, 100c, 100d) comprises:
a speed detection unit (2) for detecting the moving speed of the bike (B) and
generating a speed signal according to the moving speed;
a speed-to-brightness conversion circuit (3), coupled to the speed detection
unit (2) for generating a conversion signal according to the speed signal;
a brightness regulation circuit (4), coupled to the speed-to-brightness
conversion circuit (3) for generating a brightness regulation signal according to the conversion signal; and
a driving circuit (5), coupled to the brightness regulation circuit (4) for
regulating brightness of the lighting device (1, 1a, 1b) according to the brightness regulation signal.

2. The control circuit (100, 100a, 100b, 100c, 100d) as claimed in claim 1, **characterized in that** the speed detection unit (2) is implemented in a speed meter (6, 6a).

3. The control circuit (100, 100a, 100b, 100c, 100d) as claimed in claim 2, **characterized in that** the speed-to-brightness conversion circuit (3) is implemented in the speed meter.

4. The control circuit (100, 100a, 100b, 100c, 100d) as claimed in claim 1, **characterized in that** the speed detection unit (2) is coupled to the speed-to-brightness conversion circuit (3) in a wireless manner.

5. The control circuit (100, 100a, 100b, 100c, 100d) as claimed in claim 1, **characterized in that** the speed-to-brightness conversion circuit (3) is coupled to brightness regulation circuit (4) in a wireless manner.

6. The control circuit (100, 100a, 100b, 100c, 100d) as claimed in claim 1, **characterized in that** the speed-to-brightness conversion circuit (3) is coupled to the brightness regulation circuit (4) in a wired manner.

7. The control circuit (100, 100a, 100b, 100c, 100d) as claimed in claim 1, **characterized in that** the speed-to-brightness conversion circuit (3) has a brightness look-up-table (LUT) implemented therein.

8. The control circuit (100, 100a, 100b, 100c, 100d) as claimed in claim 1, **characterized in that** the brightness regulation circuit (4) comprises a pulse-width-modulation (PWM) circuit.

9. The control circuit (100, 100a, 100b, 104c, 100d) as claimed in claim 1, **characterized in that** the brightness regulation circuit (4) comprises a voltage control circuit.

10. The control circuit (100, 100a, 100b, 100c, 100d) as claimed in claim 1, **characterized in that** the brightness regulation circuit (4) comprises a current control circuit.

11. The control circuit (100, 100a, 100b, 100c, 100d) as claimed in claim 1, **characterized in that** the lighting device (1, 1a, 1b) is a headlight.

12. The control circuit (100, 100a, 100b, 100c, 100d) as claimed in claim 1, **characterized in that** the lighting device (1, 1a, 1b) is a taillight.

13. The control circuit (100, 100a, 100b, 100c, 100d) as claimed in claim 1, **characterized in that** the control circuit further comprises an automatic switching circuit for turning off the lighting device (1, 1a, 1b) when the speed detection unit (2) detects moving speed of the bike maintained zero for a predetermined time.

14. The control circuit (100, 100a, 100b, 100c, 100d) as claimed in claim 13, **characterized in that** the control circuit further comprises a brightness detection unit (9) coupled to the automatic switching circuit for detecting brightness of surroundings and turning on the lighting device (1, 1a, 1b) when the brightness detection unit (9) detects brightness of surroundings was less than a predetermined brightness.
